# EUROPEAN PATENT APPLICATION

(11) **EP 2 792 768 A1**
(43) Date of publication of application: **22.10.2014**
(21) Application number: 13164011.2
(22) Date of filing: 16.04.2013
(51) Int. Cl.: C23C 22/00

(54) **Suspension for improving the corrosion inhibition of steel, method for protecting steel from corrosion and uses of the suspension**

(71) Applicant: Coventya SAS, 92396 Villeneuve-la-Garenne Cedex (FR); EWH Industrieanlagen GmbH & Co. KG, 58739 Wickede/Ruhr (DE)
(72) Inventor: Hill, Alain, 92500 Rueil-Malmaison (FR); Nitzsche, Thomas, 58675 Hemer (DE)
(74) Representative: Pfenning, Meinig & Partner GbR

(57) **Abstract**

The present invention provides a suspension and method for improving the corrosion protection of substrates which comprise or consist of steel. It has been discovered that if an organic derivative of a bentonite clay and a modified urea are added to a dispersion of flakes of Zn, Al and/or Mg, or alloys thereof, the resulting suspension demonstrates a rheological profile which is ideally suited for coating steel substrates. In fact, the inventive suspension enables coating with a high consistency of performance. The performance of the suspension is already reached after one coating process i.e. even after a dip/spin coating process is conducted only one once. In conclusion, steel substrates can be provided with a high-quality corrosion resistant coating in a more economical way compared to the prior art.

## Description

The present invention provides a suspension and method for improving the corrosion protection of substrates which comprise or consist of steel. It has been discovered that if an organic derivative of a bentonite clay and a modified urea are added to a dispersion of flakes of Zn, Al and/or Mg, or alloys thereof, the resulting suspension demonstrates a rheological profile which is ideally suited for coating steel substrates. In fact, the inventive suspension enables coating with a high consistency of performance. The performance of the suspension is already reached after one coating process i.e. even after a dip/spin coating process is conducted only one once. In conclusion, steel substrates can be provided with a high-quality corrosion resistant coating in a more economical way compared to the prior art.

According to the state of the art, fasteners (e.g. iron made screws or nuts, or clips and non-threaded fasteners) are coated with solvent- or water-based coatings comprising zinc/aluminium flakes by a dip/spin process to protect them from corrosion.

The first stage of the dip/spin process is to put the coating in a container at the right dry solid content. In the dip stage, fasteners are put in a basket, which is plunged in the container. In the spin stage, the wet coated fasteners are pulled out of the coating container and the basket is spun at high speed to eject the excess coating.

Subsequently, coated screws are downloaded on a belt and driven to a drying zone, and finally go to an oven for curing of the dried coating. This way the first layer of coating is deposited on each fastener.

Usually, a second coat is dip/spun the same way after cooling the fasteners.

With this two-coat process, regularly a minimum of 24 g/m² of coating weight is reached. To test the performance of the coating, a salt spray test is the most common test to account for corrosion resistance performance. By using the two-coat process, good salt spray performance is obtained, unless the edges of the fasteners are not covered.

However, the dip/spin process generally suffers the disadvantage of providing a small coating weight per coat and a lack of homogeneity in thickness of the cured coating on the fasteners. The main reason for this deficiency is found in the coating compositions demonstrating bad flow behavior which is linked to the huge density difference between the pigments and the continuous phase. Thus, resulting coatings show poor settling resistance - on storage or during application - and poor homogeneity in thickness on the surface of the fasteners.

In conclusion, the consistency in overall performance which end users, car manufacturers and fasteners manufacturers want is not reached.

Another drawback in the state of the art is that consistency in corrosion resistance is only reached with the two-coat process and off a coating application assembly line. On the assembly line, fasteners are transported and often mechanically damaged. Because of mechanical damage to the fasteners on assembly lines, the consistency in performance of existing systems is poor.

The object of the present invention was thus the provision of coating compositions for improving the corrosion inhibition of steel substrates which overcome the deficiencies of the prior art. Furthermore, the object was to provide a method for protecting steel substrates from corrosion.

The object is solved by the suspension for improving the corrosion inhibition of substrates comprising or consisting of steel according to claim 1, the method for protecting substrates comprising or consisting of steel from corrosion and the use of the inventive suspension according to claim 15. The dependent claims highlight preferred embodiments of the invention.

According to the invention, a suspension for improving the corrosion inhibition of substrates comprising or consisting of steel is provided, wherein the suspension comprises or consists of
a) a liquid;
b) flakes comprising or consisting of Zn, Al and/or Mg, or alloys thereof;
c) a first rheological additive comprising or consisting of an organic derivative of a bentonite clay;
d) a second rheological additive comprising or consisting of a modified urea.

The inventive suspension has the advantage that a high consistency of performance is reached only after a one-coat process of coating i.e. even after the dip/spin process is employed only one time. Thus, corrosion protection is achieved in a faster i.e. more economical way.

In summary, the inventive suspension has the following advantages compared to products of the prior art:
■ excellent settling resistance: In the inventive suspension, the flake concentration does not vary in time which has a positive impact on the consistency of the corrosion performance. After storage, the suspension does not have to be stirred very long to get a homogeneous suspension which eases the work of the coater;
■ high coating weights after a one-coat process (= only one coating): There is no need for a two-coat process which reduces drastically the coating time and the price as the coating process costs much more than the liquid coating itself;
■ good homogeneity in thickness: The desired corrosion performance is achieved more consistently. Drops in corrosion resistance performance which are observed with coating compositions of the prior art are prevented. Moreover, the good homogeneity in thickness improves the friction behavior (e.g. in multiple tightening of fasteners).

In terms of Rheology, the properties of the inventive suspension compared to the prior art solutions can be summarized as follows:
■ increased low shear viscosity;
■ strong shear thinning character with higher viscosity values in the medium and high shear rates domains;
■ fast viscosity recovery after high shear stress, with retarded thixotropy to allow for wet film rebuilt after touch mark.

The above rheological behavior is achieved by the inventive combination of the first and second rheological modifier. In this regard, it has been discovered that the organic derivative of a bentonite clay boosts the flow curve in the medium to high shear viscosity values whereas, at the same time, the modified urea increases very much the viscosity values in the low shear rate viscosity domain. This turned out to be the ideal rheological profile for a coating suspension for steel substrates.

According to a preferred embodiment of the invention, the liquid comprises or consists of a non-polar, medium-polar and/or polar solvent, preferably an aromatic solvent and/or hydroxylated solvent, more preferably a binder solution.

The inventive suspension may comprise the flakes in a concentration range of 30 to 60 wt.-%.

Preferably, the flakes have a size of 5 to 50 µm in length and/or a parallepipedic (lamellae) shape. The advantage of flakes and, in particular, flakes of parallepipedic (lamellae) shape is that the particles have a higher surface to volume ratio compared to other particle shapes like e.g. spheric shape.

In a further preferred embodiment of the invention, the first rheological additive comprises or consists of particles, preferably particles having a size of less than 1 µm.

The organic derivative of the bentonite clay may have
a) a density of 1.2 to 1.6 g/cm³, preferably 1.3 to 1.5 g/cm³, more preferably of 1.4 to 1.5 g/cm³; and/or
b) a bulk density of 0.2 to 0.3 g/cm³, preferably 0.22 to 0.26 g/cm³, more preferably 0.23 to 0.25 g/cm³.

It is particularly preferred if the first rheological additive comprises or consists of at least one member of the Bentone SD^{®} family (of Elementis Specialities), or an equivalent thereof, preferably Bentone^{®} SD-1 or SD-3.

The second rheological additive may comprise fibres. Preferably, the second rheological additive has thixotropy enhancing properties.

In a preferred embodiment, the second rheological additive comprises or consists of BYK^{®}-410 (trademark of BYK Additives & Instruments).

In a particular preferred embodiment, the inventive suspension comprises
a) 0.2 to 2.0 wt-%, preferably 0.6 to 1.8 wt.-%, more preferably 1.0 to 1.6 wt.-%, most preferably 1.2 to 1.4 wt.-% of the first rheological additive; and/or
b) 0.1 to 3.0 vol.-%, preferably 0.3 to 2.0 vol.-%, more preferably 0.6 to 1.6 vol.-%, most preferably 0.8 to 1.2 vol.-% of the second rheological additive.

Further, a method for protecting substrates comprising or consisting of steel from corrosion is provided, wherein the method comprises or consists of the following steps:
a) coating a substrate comprising or consisting of steel at least partially with the inventive suspension;
b) drying the coating; and
c) curing the dried coating.

Preferably, in step a), the substrate is coated by contacting the substrate at least partially with the inventive suspension and subsequently removing excess suspension, preferably by spinning at a force ranging from 20 g to 40 g.

The coating may be effected by spraying the substrate with the suspension and/or dipping the substrate into the suspension, preferably with subsequently spinning and/or draining the substrate.

In step c), the curing of the coating may be effected at a temperature of 220 to 280 °C, preferably 230 to 240°C, for a time of 10 to 40 minutes, preferably 20 to 30 minutes.

Finally, it is suggested to use the inventive suspension for coating substrates, preferably for coating fasteners, more preferably for coating screws, nuts, clips and/or non-threaded fasteners.

With reference to the following Examples and Figures, the subject according to the invention is intended to be explained in more detail without wishing to restrict said subject to the special embodiments shown here.
Figure 1 shows the comparison of the flow curve of the viscosity versus the shear rate of two different samples of an inventive suspension (-○- and -∇-) compared to a sample of a suspension which is based on the inventive suspension but which neither contains an organic derivative of a bentonite clay nor a modified urea (in the following called: "reference product") (-●-).
Figure 2 shows the comparison of the viscosity recovery curves of two different samples of an inventive suspension (-○- and -∇-) compared to a sample of the reference product (-●-).
Figure 3 shows the comparison of the viscosity recovery curves of four samples of reference product (-Δ-, -∇-, -○- and -●-), wherein the four samples differed in the sample preparation i.e. differed in the localization of sampling within the composition container and different time of sampling from the container.
Figure 4 shows the comparison of the viscosity recovery curves of two samples of an inventive suspension (-∇-, -▼-), wherein the two samples differed in the localization of sampling within the composition container and different time of sampling from the container.

### Example 1: Viscosit of the inventive suspension and the reference product

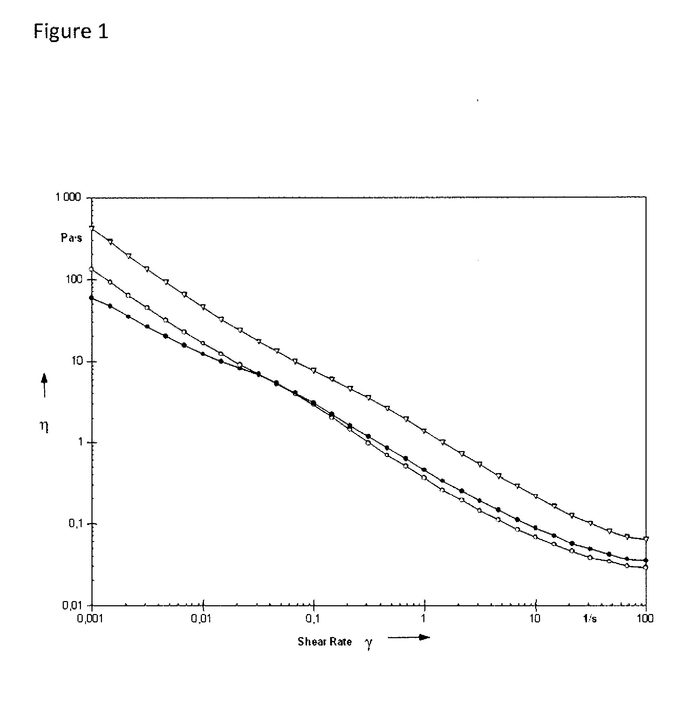

Flow curves were recorded of the inventive coating suspension or the reference product, respectively (see Figure 1). This experiment demonstrates that within the tested range of shear rates of 0.001 to 100 s⁻¹, the viscosity of the inventive solution is significantly higher than the viscosity of the reference product.

In conclusion, the viscosity of the inventive suspension is significantly higher than the viscosity of the reference product at all tested shear rates.

### Example 2: Recovery of the viscosity of the inventive suspension and the reference product

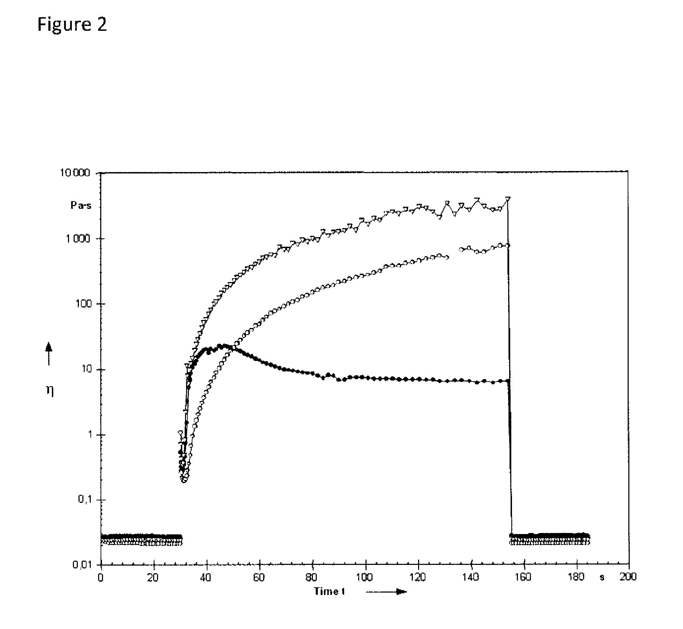

Viscosity recovery curves were recorded of the inventive coating suspension or the reference product, respectively (see Figure 2). In this experiment, the viscosity is kept low at approx. 0.02 Pa ·s for 30 seconds and then the viscosity is allowed to recover.

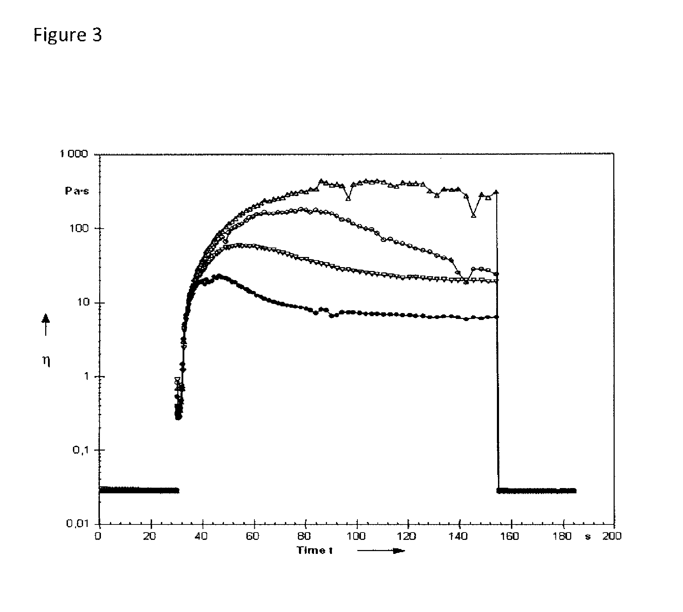

Since a sag happens within 30 seconds from the start of recovery (at the time point of 30 seconds in Figure 2 and 3), which is due to the dry solid increase in the coating application, only the data points up to 60 seconds in Figure 2A and 2B are to be taken into consideration.

From this experiment, it can be seen that the starting viscosity of approx. 0.02 Pa ·s rises steeply both for the inventive suspension and the reference product. However, at a recovery time of approx. 30 seconds (i.e. at time point 60 seconds), the reference product only recovers to a viscosity of approx. 20 Pa s whereas the inventive suspension recovers to a viscosity of approx. 400 Pa ·s (see Figure 2)

Figure 3 highlights that sample preparation and age has a strong influence on the result for the reference product (see Figure 3). The absolute values obtained after a recovery of 30 seconds are approx. 20 Pa ·s, 60 Pa ·s, 100 Pa ·s and 200 Pa ·s. Thus, absolute values after viscosity recovery varied by a factor of approx. 10 for the reference product.

In conclusion, this experiment strongly indicates that reference product displays strong heterogeneity within the storage container and over time.

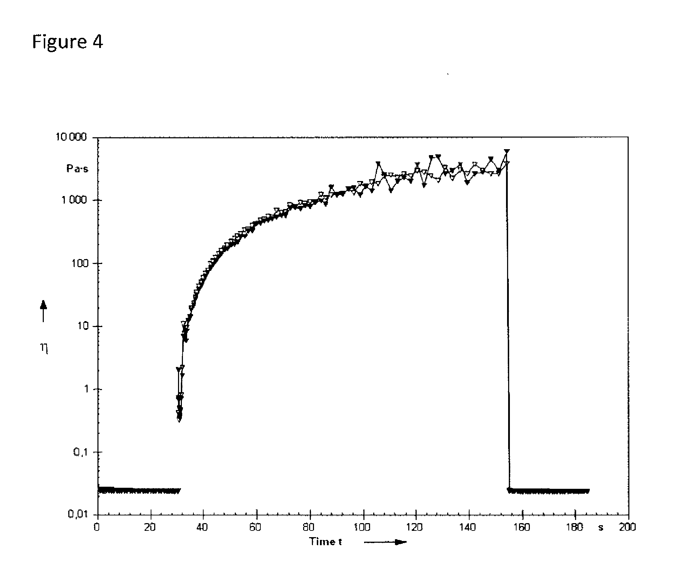

Figure 4 demonstrates that the viscosity recovery of the inventive suspension does not differ over space and time. Two samples of the inventive suspension were taken at a different point in time (i.e. after a different shear history of destructuration, recovery and rest) and from a different point in the sampling container and then measured for viscosity recovery. Figure 4 shows that the viscosity after a recovery of 30 seconds is approx. 400 Pa ·s for both samples.

In conclusion, this experiment strongly indicates that the inventive suspension displays high homogeneity within the storage container and over time.

### Example 3: Coating weight produced after a one-coat coating process with the inventive suspension or with the reference product

Fasteners were coated with a one-coat process employing the inventive suspension or the reference product, respectively. In said process, fasteners were dipped in the inventive suspension or the reference product, respectively, for the same period of time (approx. 10 to 15 seconds or slightly longer if they had a recessed head).

During the spin procedure, fasteners were spun at 220 rpm (centrifugal force is approx. 20-25 g) for 8 seconds. It turned out that the coating weight per treated surface is much higher (approx. 10 g/m² more) if the fasteners are coated with the inventive suspension compared to the reference product (see Table 1).

**Table 1**

| **Inventive suspension** | | | **Reference product** | | |
|---|---|---|---|---|---|
| **Sample #** | **Weight before coating** | **Weight after coating** | **Sample #** | **Weight before coating** | **Weight after coating** |
| **1** | 64.5843 | 64.7021 | **1** | 64.6714 | 64.6551 |
| **2** | 64.5753 | 64.6324 | **2** | 64.7573 | 64.6551 |
| **3** | 64.5596 | 64.6554 | **3** | 64.6022 | 64.4440 |
| **4** | 64.5564 | 64.6642 | **4** | 64.7822 | 64.6380 |
| **5** | 64.7865 | 64.6903 | **5** | 64.3949 | 64.7234 |
| **6** | 64.6177 | 64.7140 | **6** | 64.5317 | 64.8087 |
| **7** | 64.5521 | 64.6341 | **7** | 64.5961 | 64.6249 |
| **8** | 64.6983 | 64.8910 | **8** | 64.5744 | 64.8359 |
| **9** | 64.5521 | 64.8029 | **9** | 64.6179 | 64.6703 |
| **10** | 64.5800 | 64.6879 | **10** | 64.5897 | 64.6728 |
| **Total:** | 646.0623 | 647.0743 | | 646.1178 | 646.7282 |
| **Total coating weight:** | | 1.0120 g | | | 0.6104 g |
| **Coating weight/surface:** | | **24.6 g/m²** | | | **14.9 g/m²** |

### Example 4: Corrosion resistance of fasteners coated with the inventive suspension or with the reference product

One group of fasteners was coated with the inventive suspension in a one-coat process to have a coating weight per surface of approx. 24.6 g/m².

For comparison of roughly equal coating thicknesses, another group of fasteners was treated in a two-coat process with the reference product and finally had a coating weight per surface of approx. 20-21 g/m².

Both groups were subjected to a 720 hours Salt Spray Test. After the test, fasteners which were coated with the inventive suspension in a one-coat process demonstrated a roughly equal performance in corrosion resistance like fasteners coated with the reference product in a two-coat process.

## Claims

1. Suspension for improving the corrosion inhibition of substrates comprising or consisting of steel, wherein the suspension comprises or consists of
a) a liquid;
b) flakes comprising or consisting of Zn, Al and/or Mg, or alloys thereof;
c) a first rheological additive comprising or consisting of an organic derivative of a bentonite clay;
d) a second rheological additive comprising or consisting of a modified urea.

2. Suspension according to claim 1, wherein the liquid comprises or consists of a non-polar, medium-polar and/or polar solvent, preferably an aromatic solvent and/or hydroxylated solvent, more preferably a binder solution.

3. Suspension according to one of claims 1 or 2, wherein the suspension comprises flakes in a concentration range of 30 to 60 wt.-%.

4. Suspension according to one of the previous claims, wherein the flakes have
a) a size of 5 to 50 µm in length; and/or
b) a parallepipedic (lamellae) shape.

5. Suspension according to one of the preceding claims, wherein the first rheological additive comprises or consists of particles, preferably particles having a size of less than 1 µm.

6. Suspension according to one of the preceding claims, wherein the organic derivative of the bentonite clay has
a) a density of 1,2 to 1.6 g/cm³, preferably 1.3 to 1.5 g/cm³, more preferably of 1.4 to 1.5 g/cm³; and/or
b) a bulk density of 0.2 to 0.3 g/cm³, preferably 0.22 to 0.26 g/cm³, more preferably 0.23 to 0.25 g/cm³.

7. Suspension according to one of the previous claims, wherein the first rheological additive comprises or consists of at least one member of the Bentone SD^{®} family (of Elementis Specialities), or an equivalent thereof, preferably Bentone^{®} SD-1 or SD-3.

8. Suspension according to one of the previous claims, wherein the second rheological additive comprises fibres and preferably has thixotropy enhancing properties.

9. Suspension according to one of the preceding claims, wherein the second rheological additive comprises or consists of BYK^{®}-410 (of BYK Additives & Instruments).

10. Suspension according to one of the previous claims, wherein suspension comprises
a) 0.2 to 2.0 wt-%, preferably 0.6 to 1.8 wt.-%, more preferably 1.0 to 1.6 wt.-%, most preferably 1.2 to 1.4 wt.-% of the first rheological additive; and/or
b) 0.1 to 3.0 vol.-%, preferably 0.3 to 2.0 vol.-%, more preferably 0.6 to 1.6 vol.-%, most preferably 0.8 to 1.2 vol.-% of the second rheological additive.

11. Method for protecting substrates comprising or consisting of steel from corrosion, wherein the method comprises or consists of the following steps:
a) coating a substrate comprising or consisting of steel at least partially with the suspension according to one of claims 1 to 10;
b) drying the coating; and
c) curing the dried coating.

12. Method according to claim 11, wherein in step a), the substrate is coated by contacting the substrate at least partially with the suspension according to one of claims 1 to 10 and subsequently removing excess suspension, preferably by spinning at a force ranging from 20 g to 40 g.

13. Method according to one of claims 11 to 12, wherein the coating is effected by spraying the substrate with the suspension and/or dipping the substrate into the suspension, preferably with subsequently spinning and/or draining the substrate.

14. Method according to one of claims 11 to 13, wherein in step c), the curing of the coating is effected at a temperature of 220 to 280 °C, preferably 230 to 240°C, for a time of 10 to 40 minutes, preferably 20 to 30 minutes.

15. Use of the suspension according to one of claims 1 to 10 for coating substrates, preferably for coating fasteners; more preferably for coating screws, nuts, clips and/or non-threaded fasteners.
